# EUROPEAN PATENT APPLICATION

(11) **EP 4 478 455 A2**
(43) Date of publication of application: **18.12.2024**
(21) Application number: 24177005.6
(22) Date of filing: 21.05.2024
(51) Int. Cl.: H01M 4/38, H01M 4/505, H01M 4/54, H01M 10/0525, H01M 10/0568, H01M 10/0569, H01M 10/04

(54) **NONAQUEOUS ELECTROLYTE SECONDARY BATTERY AND METHOD FOR MANUFACTURING NONAQUEOUS ELECTROLYTE SECONDARY BATTERY**

(30) Priority: 12.06.2023 JP 2023096530
(71) Applicant: Prime Planet Energy & Solutions, Inc., Chuo-ku Tokyo 103-0022 (JP)
(72) Inventor: HANAZAKI, Ryo, Tokyo, 103-0022 (JP)
(74) Representative: Kuhnen & Wacker Patent- und Rechtsanwaltsbüro PartG mbB

(57) **Abstract**

The present disclosure provides a nonaqueous electrolyte secondary battery (100) including: an electrode body having a positive electrode (22) and a negative electrode (24); and a nonaqueous electrolyte. The positive electrode (22) includes a lithium transition metal complex oxide, the negative electrode (24) includes graphite particles and a Si-containing material, and the nonaqueous electrolyte includes fluoroethylene carbonate and a difluorophosphate. The ratio of the mass of the fluoroethylene carbonate to the mass of the Si-containing material is 0.2 or more.

## Description

### BACKGROUND OF THE DISCLOSURE

### 1. Field

The present disclosure relates to a nonaqueous electrolyte secondary battery and a method for manufacturing the nonaqueous electrolyte secondary battery.

### 2. Background

Nonaqueous electrolyte secondary batteries, which include a positive electrode, a negative electrode, and a nonaqueous electrolyte, have been conventionally known. In such nonaqueous electrolyte secondary batteries, various combinations of positive electrode active materials, negative electrode active materials, and nonaqueous electrolytes have been studied. As the prior art associated with this, Japanese Patent Application Publications No. 2020-64717 (JP-A-2020-64717) and No. 2019-185992 (JP-A-2019-185992) are cited. JP-A-2020-64717 describes a nonaqueous electrolyte secondary battery containing a positive electrode active material represented by a predetermined general formula, an additive selected from the group consisting of cyclohexylbenzene and biphenyl, and a nonaqueous electrolyte containing lithium difluorophosphate. JP-A-2019-185992 describes a nonaqueous electrolyte secondary battery containing a negative electrode active material including silicon oxide particles and a silicon layer, and a nonaqueous electrolyte containing at least one selected from the group consisting of fluoroethylene carbonate and vinylene carbonate.

### SUMMARY

In recent years, nonaqueous electrolyte secondary batteries containing Si-containing material in the negative electrode have been studied for the purpose of achieving higher capacity and the like. Fluoroethylene carbonate adsorbs onto a surface of the negative electrode to protect a surface of the Si-containing material and suppresses side reactions with the electrolyte, thereby enabling improvement in capacity retention rate after cycling. The lithium difluorophosphate can adsorb onto a surface of the positive electrode to protect the surface of the positive electrode active material and can suppress an increase in internal resistance thereof. However, according to the results of the studies conducted by the inventors, it has been found that when using a negative electrode containing a Si-containing material, and a nonaqueous electrolyte containing only one of fluoroethylene carbonate and lithium difluorophosphate, the effect of improving cycle characteristics (e.g., capacity retention rate after cycling) of the nonaqueous electrolyte secondary battery is not sufficient.

The present disclosure has been made in view of the above circumstances, and its purpose is to provide a nonaqueous electrolyte secondary battery that has a negative electrode containing a Si-containing material and has excellent capacity retention rate, and also to provide a method for manufacturing the same.

According to the present disclosure, there is provided a nonaqueous electrolyte secondary battery, including: an electrode body having a positive electrode and a negative electrode; a nonaqueous electrolyte; and a battery case. In the nonaqueous electrolyte secondary battery, the positive electrode includes, as a positive electrode active material, a lithium transition metal complex oxide containing at least lithium and manganese, the negative electrode includes graphite particles and a Si-containing material as a negative electrode active material, and the nonaqueous electrolyte includes fluoroethylene carbonate and a difluorophosphate. The ratio of the mass of the fluoroethylene carbonate to the mass of the Si-containing material is 0.2 or more.

Such an arrangement can suitably exhibit the protective effect of the fluoroethylene carbonate for the surface of the negative electrode (especially, the surface of the Si-containing material) and the protective effect of the difluorophosphate for the surface of the positive electrode (particularly, the surface of the positive electrode active material). This suppresses cracking or the like of the Si-containing material during charging/discharging, thereby achieving a nonaqueous electrolyte secondary battery with excellent capacity retention rate.

According to another aspect, there is provided a method for manufacturing a nonaqueous electrolyte secondary battery including an electrode body having a positive electrode and a negative electrode, a nonaqueous electrolyte, and a battery case. The manufacturing method includes: a construction step of constructing an assembly by housing the electrode body in the battery case; a preparation step of preparing a nonaqueous electrolyte containing fluoroethylene carbonate and a difluorophosphate; and a pouring step of pouring the nonaqueous electrolyte into the battery case. Here, the positive electrode includes a positive electrode active material, and the negative electrode includes graphite particles and a Si-containing material as a negative electrode active material. In the preparation step, the nonaqueous electrolyte is prepared such that a ratio of a mass of the fluoroethylene carbonate to a mass of the Si-containing material is 0.2 or more. With such an arrangement, a nonaqueous electrolyte secondary battery with excellent capacity retention rate can be suitably manufactured.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically showing a nonaqueous electrolyte secondary battery according to one embodiment;
FIG. 2 is a schematic longitudinal sectional view taken along the line II-II of FIG. 1;
FIG. 3 is a schematic diagram showing a structure of an electrode body; and
FIG. 4 is a flowchart of a manufacturing method according to one embodiment.

### DETAILED DESCRIPTION OF THE PREFERRED EMBODIMENTS

Some preferred embodiments of the technology disclosed herein will be described with reference to the accompanying drawings. Matters other than matters particularly mentioned in this specification and necessary for the implementation of the present disclosure (for example, the general structure and manufacturing process of a nonaqueous electrolyte secondary battery that do not characterize the present disclosure) can be grasped as design matters of those skilled in the art based on the prior art in the relevant field. The present disclosure can be implemented on the basis of the disclosure of this specification and common technical knowledge in the relevant field.

The term "nonaqueous electrolyte secondary battery" as used in this specification refers to general batteries that can be repeatedly charged and discharged by the movement of charge carriers between positive and negative electrodes via a nonaqueous electrolyte. The concept of the nonaqueous electrolyte secondary battery encompasses so-called storage batteries, such as lithium-ion secondary batteries, and capacitors, such as lithium-ion capacitors and electric double-layer capacitors. In this specification, the notation "A to B" indicative of a range encompasses the meanings of "greater than A" and "less than B" as well as "A or more" and "B or less".

### <Battery 100>

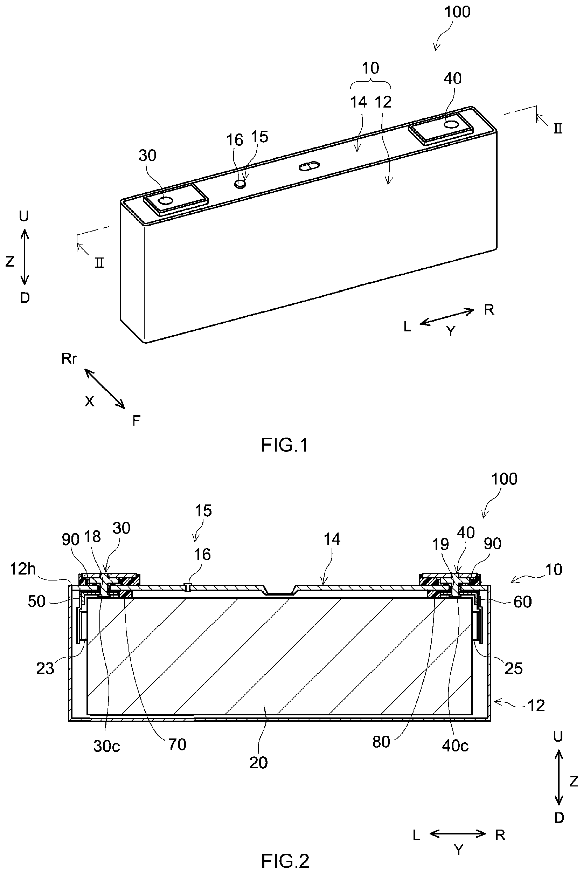

FIG. 1 is a perspective view of a battery 100. FIG. 2 is a schematic longitudinal sectional view taken along the line II-II in FIG. 1. In the following description, reference characters L, R, F, Rr, U, and D in the figures represent left, right, front, rear, up, and down, respectively, and reference characters X, Y, and Z in the figures represent the short side direction, the long side direction orthogonal to the short side direction, and the vertical direction orthogonal to the short and long side directions of the battery 100, respectively. However, these characters indicate the directions only for convenience of explanation and do not limit the installation form of the battery 100 in any way.

As shown in FIG. 2, the battery 100 includes a battery case 10, an electrode body 20, a positive electrode terminal 30, a negative electrode terminal 40, a positive electrode current collector 50, a negative electrode current collector 60, and a nonaqueous electrolyte (not shown). The battery 100 here is a lithium-ion secondary battery. The battery 100 is preferably a lithium-ion secondary battery.

The battery case 10 is a housing in which the electrode body 20 and the nonaqueous electrolyte are housed. As shown in FIG. 1, the battery case 10 here has an external appearance of a flat, bottomed rectangular (square) shape. The material of the battery case 10 is not particularly limited and may be the same as that conventionally used. The battery case 10 is preferably made of metal, more preferably aluminum, aluminum alloy, iron, iron alloy, or the like, for example. However, in other embodiments, the battery case 10 may be in the form of a bag made of, for example, a laminated film. As shown in FIG. 2, the battery case 10 includes an exterior body 12 having an opening 12h and a sealing plate (lid) 14 closing the opening 12h. The sealing plate 14 is attached to the exterior body 12 so as to close the opening 12h of the exterior body 12. The battery case 10 is integrated by the sealing plate 14 joined (e.g., welded) to the periphery of the opening 12h of the exterior body 12. The battery case 10 is sealed in an airtight manner (hermetically sealed).

As shown in FIG. 2, the sealing plate 14 is provided with a pouring hole 15 and two terminal withdrawal holes 18 and 19. The pouring hole 15 is for pouring the nonaqueous electrolyte into the battery case 10 after the sealing plate 14 is assembled to the exterior body 12. The sealing plate 14 is preferably provided with the pouring hole 15. The pouring hole 15 is sealed by a sealing member 16. The terminal withdrawal holes 18 and 19 are formed at both end portions of the sealing plate 14 in its long side direction Y (left end portion and right end portion in FIG. 2), respectively. The terminal withdrawal holes 18 and 19 penetrate the sealing plate 14 in its thickness direction (vertical direction Z).

As shown in FIG. 2, the positive electrode terminal 30 and the negative electrode terminal 40 extend from the inside to the outside of the sealing plate 14 through the terminal withdrawal holes 18 and 19, respectively. The positive electrode terminal 30 and the negative electrode terminal 40 are here caulked to the peripheral portions surrounding the terminal withdrawal holes 18 and 19 of the sealing plate 14 through a caulking process, respectively. Caulked portions 30c and 40c are formed at end portions (lower end portions shown in FIG. 2) of the positive electrode terminal 30 and the negative electrode terminal 40 on the exterior body 12 side, respectively.

The positive electrode terminal 30 is electrically connected to a positive electrode tab group 23 of the electrode body 20 via the positive electrode current collector 50 inside the battery case 10. The positive electrode terminal 30 is insulated from the sealing plate 14 by a positive electrode insulating member 70 and a gasket 90. The positive electrode terminal 30 is preferably made of metal, and more preferably aluminum or aluminum alloy, for example. The negative electrode terminal 40 is electrically connected to a negative electrode tab group 25 of the electrode body 20 via the negative electrode current collector 60 inside the battery case 10. The negative electrode terminal 40 is insulated from the sealing plate 14 by a negative electrode insulating member 80 and the gasket 90. The negative electrode terminal 40 is preferably made of metal, more preferably copper or copper alloy, for example.

As described above, the nonaqueous electrolyte is housed inside the battery case 10, together with the electrode body 20. The nonaqueous electrolyte of the battery 100 disclosed herein contains fluoroethylene carbonate (hereinafter also referred to as "FEC") and a difluorophosphate. The nonaqueous electrolyte may contain nonaqueous solvents in addition to fluoroethylene carbonate, as well as salts (supporting salts) in addition to the difluorophosphate, to the extent that the technology disclosed herein is not compromised.

The FEC described above is highly effective particularly in protecting the Si-containing material by adhering to the surface of the Si-containing material included in a negative electrode 24. Meanwhile, the FEC has a tendency to adsorb on the surface of a positive electrode 22 (in detail, the surface of the positive electrode active material) because of its carbonate skeleton. In addition, difluorophosphate is a material that easily interacts with the surface of the positive electrode active material and adsorbs onto the surface of the positive electrode active material to protect the active material. According to the results of studies conducted by the inventors, they have found that when using a nonaqueous electrolyte containing only one of FEC and a difluorophosphate, the effect of improving the capacity retention rate of the nonaqueous electrolyte secondary battery is not sufficiently exhibited. This is assumed to be because the Si-containing material is not protected when the nonaqueous electrolyte does not contain FEC, resulting in film formation on the surface of the Si-containing material, for example. Further, it is also assumed that when the nonaqueous electrolyte does not contain a difluorophosphate, FEC also adheres to the surface of the positive electrode as well, whereby the Si-containing material is not sufficiently protected, resulting in film formation on the surface of the Si-containing material, for example. Therefore, the battery 100 disclosed herein contains FEC and a difluorophosphate. The difluorophosphate preferentially adheres to the surface of the positive electrode 22 over the FEC, so that the protective effect of FEC for the Si-containing material is appropriately exhibited. Thus, the cycling characteristics (e.g., capacity retention rate after cycling) of the nonaqueous electrolyte secondary battery is improved suitably.

Fluoroethylene carbonate (FEC) is one kind of fluorinated cyclic carbonate. Carbonates are classified into non-fluorinated carbonates and fluorinated carbonates, depending on whether or not they contain fluorine (F) as a constituent element. Carbonates are also classified into chain carbonates and cyclic carbonates, depending on their chemical structures. The chain carbonates are acyclic (chain) carbonate compounds with a carbonate skeleton (O-CO-O). The cyclic carbonates are carbonate compounds with a carbonate skeleton closed in a ring by a C-C bond. The nonaqueous solvent may contain fluorinated carbonates, including fluorinated chain carbonates and fluorinated cyclic carbonates, in addition to FEC.

As the nonaqueous solvent other than FEC, those conventionally known to be usable in nonaqueous electrolyte secondary batteries can be used alone or in combination of two or more kinds thereof. Examples of nonaqueous solvents include organic solvents such as carbonates, ethers, esters, nitriles, sulfones, and lactones. The nonaqueous solvent preferably includes a carbonate(s). Specific examples thereof include ethylene carbonate (EC), propylene carbonate (PC), diethyl carbonate (DEC), dimethyl carbonate (DMC), ethyl methyl carbonate (EMC), and the like.

If the FEC content in the nonaqueous electrolyte is extremely small, it is difficult to appropriately exhibit the protective effect for the Si-containing material described above. Here, the FEC content in the nonaqueous electrolyte is preferably restricted by the ratio thereof with respect to the content of the Si-containing material included in the negative electrode 24 from the viewpoint of appropriately exhibiting the effect of the technology disclosed herein. The ratio of the mass of the FEC to the mass of the Si-containing material is preferably 0.2 or more, more preferably 0.28 or more, and may be 0.45 or more. Thus, the capacity retention rate after cycling is suitably improved. The upper limit of the ratio of the mass of FEC to the mass of the Si-containing material is not particularly limited. As the FEC content in the nonaqueous solvent increases, the volume of gas produced during charging/discharging tends to increase. From the viewpoint of reducing the volume of gas produced, the ratio of the mass of FEC to the mass of the Si-containing material is preferably, for example, 1.6 or less, and may be 1.2 or less, or 1 or less.

Although not particularly limited, the ratio of the mass of FEC to the total amount of the negative electrode active material (i.e., the total mass of graphite particles, the Si-containing material, and other negative electrode active materials) contained in the negative electrode 24 is preferably 0.04 or less. This suitably reduces the volume of gas produced after cycling. The ratio of the mass of FEC to the mass of the negative electrode active material is preferably 0.005 or more and 0.04 or less, more preferably 0.01 or more and 0.04 or less, and may be 0.01 or more and 0.035 or less. Although not particularly limited, when the ratio of the mass of FEC to the mass of the negative electrode active material is 0.007 or more and 0.048 or less, and the ratio of the mass of FEC to the mass of the Si-containing material is 0.2 or more, the improvement in capacity retention rate after cycling and reduction in the volume of gas produced are suitably achieved.

Although not particularly limited, the volume percentage of FEC is preferably 10% by volume or less, assuming that the total volume of the nonaqueous solvent is 100% by volume. Thus, the volume of gas produced during charging/discharging can be suitably suppressed while appropriately exhibiting the protective effect for the Si-containing material. For example, assuming that the total volume of the nonaqueous solvent is 100% by volume, the volume percentage of FEC is preferably 0.5% by volume to 10% by volume, more preferably 1% by volume to 10% by volume, and even more preferably 1% by volume to 7% by volume.

Difluorophosphate is a salt of an anion represented by PO₂F₂⁻ and a cation. Examples of cations include ions of alkali metal such as Li, Na, and K, ammonium ions, and the like. Among these, Li is preferable. Specific examples of preferred difluorophosphates include lithium difluorophosphate (LiDFP, LiPO₂F₂).

If the difluorophosphate content in the nonaqueous electrolyte is extremely small, it is difficult to appropriately exhibit the protective effect of FEC for the Si-containing material because FEC can preferentially adhere to the surface of the positive electrode, as described above. Here, the difluorophosphate content in the nonaqueous electrolyte is preferably restricted by the ratio thereof with respect to the positive electrode active material contained in the positive electrode 22 from the viewpoint of appropriately exhibiting the effect of the technology disclosed herein. The ratio of the mass of the difluorophosphate to the mass of the positive electrode active material is preferably 0.0008 or more, more preferably 0.001 or more, and even more preferably 0.0015 or more. This appropriately exhibits the protective effect for the surfaces of the positive and negative electrodes and suitably improves the capacity retention rate after cycling. The upper limit of the ratio of the mass of the difluorophosphate to the mass of the positive electrode active material is not particularly limited, but it is preferably, for example, 0.01 or less, more preferaly 0.005 or less and may be 0.0045 or less.

Although not particularly limited, the proportion of the difluorophosphate in the total nonaqueous electrolyte is preferably 0.1 % by mass or more and 2% by mass or less, and more preferably 0.2% by mass or more and 1.2% by mass or less.

As salts other than difluorophosphates, those conventionally known to be usable in nonaqueous electrolyte secondary batteries can be used alone or in combination of two or more kinds thereof. For lithium-ion secondary batteries, for example, fluorine-containing lithium salts such as LiPF₆ and LiBF₄ can be used.

The nonaqueous electrolyte may further contain an additive component (additive). As the additive, those conventionally known to be addable to a nonaqueous electrolyte can be used alone or in combination of two or more kinds. Various kinds of additive agents can be used, and examples thereof include: gas producing agents such as biphenyl (BP) and cyclohexylbenzene (CHB); dispersants; and thickeners.

As illustrated in FIG. 2, the electrode body 20 is housed inside the battery case 10 (in detail, inside the exterior body 12). The number of electrode bodies 20 arranged inside one battery case 10 is not particularly limited and may be one, or two or more (plural).

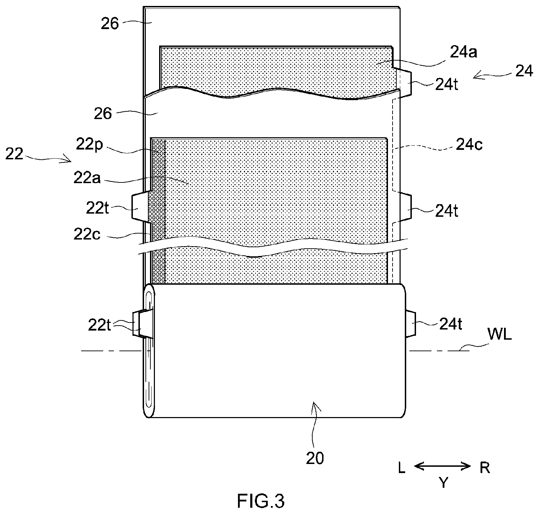

FIG. 3 is a schematic diagram showing the structure of the electrode body 20. As shown in FIG. 3, the electrode body 20 includes the positive electrode 22, the negative electrode 24, and a separator 26. The electrode body 20 here is a wound electrode body of a flat shape. The electrode body 20 is configured such that the positive electrode 22 having a band shape and the negative electrode 24 having a band shape are stacked via the separator 26 having a band shape and wound about a winding axis WL. However, the electrode body 20 may be a stacked electrode body composed of a square (typically rectangular) positive electrode and a square (typically rectangular) negative electrode that are stacked in an insulated manner.

The positive electrode 22 has a positive electrode current collector 22c, and a positive electrode active material layer 22a affixed onto at least one surface of the positive electrode current collector 22c. The positive electrode current collector 22c has a band shape. The positive electrode current collector 22c is made of conductive metal, such as aluminum, aluminum alloy, nickel, or stainless steel. The positive electrode current collector 22c here is made of metal foil, specifically aluminum foil. The positive electrode 22 may have a positive electrode protective layer 22p at its one end portion in the long side direction. When the positive electrode 22 has the positive electrode protective layer 22p, the positive electrode protective layer 22p is provided between the positive electrode current collector 22c and the positive electrode active material layer 22a in the long side direction Y The positive electrode protective layer 22p contains, for example, an inorganic filler (e.g., alumina).

Plural positive electrode tabs 22t are provided at one end portion of the positive electrode current collector 22c in the long side direction Y (left end portion in FIG. 3). The positive electrode tab 22t here is a part of the positive electrode current collector 22c and is made of metal foil (aluminum foil). The positive electrode tabs 22t are here stacked at one end portion in the long side direction Y (left end portion in FIG. 3) to constitute the positive electrode tab group 23 as shown in FIG. 2. The positive electrode tab group 23 is provided with (in detail, joined to) the positive electrode current collector 50. The positive electrode tab group 23 is electrically connected to the positive electrode terminal 30 via the positive electrode current collector 50.

The positive electrode active material layer 22a is provided in the band shape along the longitudinal direction of the band-shaped positive electrode current collector 22c. The positive electrode active material layer 22a contains the positive electrode active material that is capable of reversibly storing and releasing charge carriers. The positive electrode active material contains a lithium transition metal complex oxide. The positive electrode active material is preferably a lithium transition metal complex oxide that contains at least lithium and manganese. The crystal structure of the lithium transition metal composite oxide is not particularly limited and may be a layered structure, spinel structure, olivine structure, or the like. In some embodiments, the lithium transition metal composite oxide preferably has a layered rock salt-type crystal structure with space group C2/m (so-called lithium-rich crystal structure) from the viewpoint of achieving high energy density. Such a compound is a lithium-rich transition metal composite oxide represented by the following formula (I). Specific examples of such a lithium-rich transition metal composite oxide include Li_{1.1}Ni_{0.35}Mn_{0.55}O₂, Li_{1.14}Ni_{0.29}Mn_{0.57}O₂, Li_{1.17}Ni_{0.25}Mn_{0.58}O₂, Li_{1.2}Ni_{0.2}Mn_{0.6}O₂, Li_{1.33}Mn_{0.67}O₂, and the like.

Li₁₊ₐNiₓMn_{y}M_{z}O₂ (I)

wherein a, x, y, and z satisfy the followings: 0.1 ≤ a ≤ 0.33, 0 ≤ x ≤ 0.5, 0.5 ≤ y ≤ 0.7, 0 ≤ z ≤ 0.2, a + x + y + z = 1, and when 0 < z, M is one or more elements selected from the group consisting of Co, Al, Mg, Ca, Ti, V, Cr, Zr, Nb, Mo, Hf, Ta, and W.

Although not particularly limited, the ratio of an amount of Li to an amount of a metal element (Me), other than Li, (Li/Me), in the positive electrode active material is preferably 1.1 or more, more preferably 1.2 or more, even more preferably 1.26 or more, and particularly preferably 1.3 or more. The upper limit of the value of Li/Me is 2.0 or less, and may be 1.5 or less, or 1.4 or less. The unit for the amount of substance is mole (mol). The ratio (Li/Me) of the amount of Li to the amount of the metal element (Me) other than Li in the positive electrode active material is, for example, preferably 1.2 or more and 2 or less, more preferably 1.2 or more and 1.5 or less, and even more preferably 1.26 or more and 1.45 or less. By using a positive electrode active material in which Li/Me satisfies the above-mentioned numerical value range as the positive electrode active material, the cycle characteristics (e.g., capacity retention rate after cycling) are suitably improved.

Although not intended to limit the technology disclosed herein, the reasons for such effects are inferred as follows. As described above, by containing FEC and the difluorophosphate in the nonaqueous electrolyte, the surfaces of the positive electrode and the negative electrode are suitably protected, leading to an improvement in capacity retention rate after cycling. Here, among lithium-rich lithium transition metal composite oxides as described above, difluorophosphates tend to adhere more easily. In particular, in the Li-rich positive electrode active material in which a Li/Me value is 1.2 or more (preferably 1.26 or more, more preferably 1.3 or more), difluorophosphate is more easily adsorbed, and as a result, particularly the protective effect of FEC for the surface of the negative electrode is suitably exhibited. This appropriately exhibits the protective effect of FEC for the negative electrode 24 and also the protective effect of a difluorophosphate for the positive electrode 22, thus improving the cycle characteristics of the battery 100 (e.g., capacity retention rate after cycling).

The content of the positive electrode active material in the positive electrode active material layer 22a is not particularly limited. The content of the positive electrode active material in the positive electrode active material layer 22a (i.e., to the total mass of the positive electrode active material layer) is preferably 70% by mass or more, more preferably 80% by mass or more and 99% by mass or less, and even more preferably 85% by mass or more and 98% by mass or less.

The average particle size (D50 particle size) of the positive electrode active material is not particularly limited. The average particle size (D50 particle size) of the positive electrode active material is, for example, 0.5 µm or more and 25 µm or less, and preferably 10 µm or more and 25 µm or less. In this specification, the term "D50 particle size" refers to the particle size corresponding to the cumulative 50% from the fine particle side in the volume-based particle size distribution as measured by particle size distribution measurement based on a laser diffraction and light scattering method.

The positive electrode active material layer 22a may contain optional components, in addition to the positive electrode active material, such as binders, conductive materials, and various additive components. For example, polyvinylidene fluoride (PVdF) may be suitably used as the binder. The binder content in the positive electrode active material layer 22a is not particularly limited, but is, for example, from 0.5% by mass or more and 15% by mass or less, preferably 1% by mass or more and 10% by mass or less, and more preferably 1.5% by mass or more and 8% by mass or less. Examples of the conductive material suitably used include carbon black such as acetylene black (AB) and other carbon materials (e.g., graphite). The conductive material content in the positive electrode active material layer 22a is not particularly limited, but is, for example, 0.1% by mass or more and 20% by mass or less, preferably 1% by mass or more and 15% by mass or less, and more preferably 2% by mass or more and 10% by mass or less.

The negative electrode 24 has a negative electrode current collector 24c and a negative electrode active material layer 24a affixed onto at least one surface of the negative electrode current collector 24c. The negative electrode current collector 24c has a band shape. The negative electrode current collector 24c is made of conductive metal, such as copper, copper alloy, nickel, or stainless steel. The negative electrode current collector 24c here is made of metal foil, specifically copper foil.

Plural negative electrode tabs 24t are provided at one end portion of the negative electrode current collector 24c in the long side direction Y (right end portion in FIG. 3). The negative electrode tab 24t here is a part of the negative electrode current collector 24c and is made of metal foil (copper foil). The negative electrode tabs 24t are stacked at one end portion in the long side direction Y (right end portion in FIG. 3) to constitute the negative electrode tab group 25 as shown in FIG. 2. The negative electrode tab group 25 is provided with (in detail, joined to) the negative electrode current collector 60. The negative electrode tab group 25 is electrically connected to the negative electrode terminal 40 through the negative electrode current collector 60.

The negative electrode active material layer 24a is provided in the band shape along the longitudinal direction of the band-shaped negative electrode current collector 24c. The negative electrode active material layer 24a contains a negative electrode active material that is capable of reversibly storing and releasing charge carriers. The negative electrode active material contains at least graphite particles and a Si-containing material. In the battery 100 disclosed herein, the protective effect of the nonaqueous electrolyte for the Si-containing material is appropriately exhibited, thereby suppressing cracking and the like of the Si-containing material. Thus, the cycle characteristics (especially, capacity retention rate after cycling) is improved. In addition, by using the lithium-rich lithium transition metal composite oxide as the positive electrode active material, cracking or the like of the Si-containing material is further suppressed. Although not intended to limit the technology disclosed herein, the reasons for such effects are inferred as follows. The nonaqueous electrolyte containing FEC and the difluorophosphate protects the surface of the Si-containing material, suppressing decomposition of the electrolyte and also suppressing film formation. Thus, the cycle characteristics (especially, capacity retention rate after cycling) is improved. Furthermore, lithium-rich lithium transition metal composite oxides tend to have a slightly narrower range of working potentials, compared to conventional lithium transition metal composite oxides (e.g., lithium transition metal composite oxides that are not rich in lithium such as LiNi_{1/3}Co_{1/3}Mn_{1/3}O₂). Therefore, the range of use of Si-containing material during charging/discharging can also be made relatively narrow. This suppresses the volume change of the Si-containing material during charging/discharging, and thereby can suitably suppress cracking of the Si-containing material. The suppression of cracking of the Si-containing material reduces formation of a new surface caused by cracking, which tends to eliminate the need for additional protection of the new surface by using FEC. With these arrangements, the protection effect of the FEC is sufficiently exhibited. Thus, the capacity retention rate of the battery 100 after cycling is suitably improved.

The Si-containing material is suitably used for the purpose of achieving higher capacity of the battery 100 and the like because it has a larger specific capacity than carbon material. The Si-containing material may contain components in addition to Si, as long as it contains Si. Suitable examples of the Si-containing material include Si (silicon), SiO (silicon oxide), composites of silicon and carbon (including silicon carbide, and a SiC composite in which carbon is dispersed inside silicon particles), SiN-containing materials (silicon nitride), and porous particles in which nano-Si particles are dispersed. The Si-containing materials can be used alone or in combination of two or more kinds thereof. Among these, silicon, silicon oxide, and composites of silicon and carbon can be preferably used as the Si-containing material. Although not particularly limited, the D50 particle size of the Si-containing particle is, for example, preferably 1 µm or more and 15 µm or less, and more preferably 2 µm or more and 10 µm or less.

The mass proportion of the Si-containing material in the negative electrode active material is not particularly limited. For example, from the viewpoint of achieving both higher capacity of the battery 100 and improvement in cycle characteristics, assuming that the total amount of the negative electrode active material is 100% by mass, the mass percentage of the Si-containing material is preferably 1% by mass or more and 15% by mass or less, and more preferably 1% by mass or more and 10% by mass or less.

For example, artificial graphite and natural graphite are suitably used as the graphite particles. Graphite particles may have a coating layer of amorphous carbon on their surfaces. Although not particularly limited, graphite particles should have a substantially spherical shape. In this specification, the term "substantially spherical shape" is a term that encompasses a spherical shape, a rugby ball shape, and the like. For example, the average aspect ratio (the ratio of the length in the superaxial direction to the length in the minor axis direction in the smallest rectangle circumscribed by the particle) is, for example, 1 to 2 (preferably 1 to 1.5). The D50 particle size of graphite particles is not particularly limited, but it is, for example, preferably 5 µm or more and 30 µm or less, and more preferably 10 µm or more and 25 µm or less.

Although not particularly limited, assuming that the total amount of the negative electrode active material is 100% by mass, the mass percentage of graphite particles is preferably 85% by mass or more and 99% by mass or less, and more preferably 90% by mass or more and 99% by mass or less. This suitably achieves both higher capacity of the battery 100 and improvement in cycle characteristics.

However, the negative electrode active material may contain other negative electrode active materials, in addition to the Si-containing material and graphite. Specific examples of other negative electrode active materials other than the Si-containing material and graphite include carbon materials such as hard carbon, soft carbon, and amorphous carbon.

The content of the negative electrode active material in the negative electrode active material layer 24a is not particularly limited. The content of the negative electrode active material in the negative electrode active material layer 24a is preferably 90% by mass or more, and more preferably 95% by mass or more and 99% by mass or less.

The negative electrode active material layer 24a may contain optional components in addition to the negative electrode active material, such as binders, dispersants, conductive materials, and various additive components, for example. Rubbers such as styrene butadiene rubber (SBR) and acrylic resins such as polyacrylic acid (PAA) may be suitably used as the binder. The binder content in the negative electrode active material layer 24a is not particularly limited, but is, for example, 0.1% by mass or more and 10% by mass or less, and preferably 0.5% by mass or more and 5% by mass or less. Cellulose and its derivatives such as carboxymethylcellulose (CMC), for example, can be suitably used as a thickener. The content of the dispersant in the negative electrode active material layer 24a is not particularly limited, but is, for example, 0.1% by mass or more and 10% by mass or less, and preferably 0.5% by mass or more and 5% by mass or less.

The separator 26 is a member that insulates the positive electrode active material layer 22a of the positive electrode 22 from the negative electrode active material layer 24a of the negative electrode 24. The separator 26 may be the same as the conventional one, and is not particularly limited. For example, a porous resin sheet made of polyolefin resin such as polyethylene (PE) or polypropylene (PP) is preferable as the separator 26. The separator 26 may have a heat resistance layer (HRL) or an adhesive layer on a surface of a base part made of the porous resin sheet. The configurations of the heat resistance layer and the adhesive layer may be the same as those of conventional ones.

### <Method for Manufacturing Nonaqueous Electrolyte Secondary Battery>

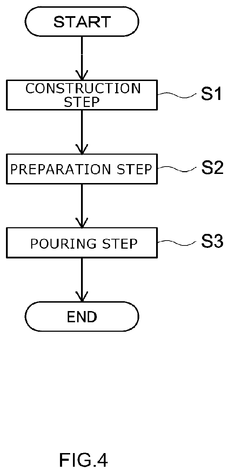

FIG. 4 is a flowchart of a manufacturing method according to one embodiment. As shown in FIG. 4, the battery 100 can be manufactured by a manufacturing method that includes, for example, a construction step (step S1), a preparation step (step S2), and a pouring step (step S3). However, the manufacturing method disclosed herein may further include other steps at any stage.

The construction step (step S1) is a process of constructing an assembly (a combined object of the battery case 10 and the electrode body 20) by housing the electrode body 20 in the battery case 10. In one preferred embodiment, this step includes an electrode fabrication step (step S1-1), an electrode body fabrication step (step S1-2), an arrangement step (step S1-3), and a welding and joining step (step S1-4). The manufacturing method may further include other steps at any stage.

First, in the electrode fabrication step (step S1-1), the respective positive and negative electrodes 22 and 24 are fabricated. The positive electrode 22 can be fabricated, for example, by mixing a positive electrode active material, a conductive material, a binder, and a dispersing solvent to prepare a positive electrode material slurry, and then applying the prepared positive electrode material slurry onto the positive electrode current collector 22c, followed by drying and suitable pressing, using conventional known methods. As the positive electrode active material, the above-mentioned materials can be used alone or in combination of two or more kinds thereof as appropriate, and among these, lithium-rich transition metal composite oxides represented by the above formula (I) can be suitably used.

The negative electrode 24 can be fabricated, for example, by mixing a negative electrode active material, a binder, a dispersant, and a dispersing solvent to prepare a negative electrode material slurry, and then applying the prepared negative electrode material slurry onto the negative electrode current collector 24c, followed by drying and suitable pressing, using conventional known methods. As the negative electrode active material, at least graphite particles and Si-containing material (preferably, at least one of silicon, silicon oxide, and a composite of silicon and carbon) are used. From the viewpoint of both achieving higher capacity of the battery 100 and improvement in cycle characteristics, assuming that the total amount of the negative electrode active material is 100% by mass, the Si-containing material is prepared such that its mass percentage is preferably 1% by mass or more and 15% or less, and more preferably 1% by mass or more and 10% by mass or less. As the negative electrode active material, the above-mentioned materials may be used alone or in combination of two or more kinds thereof.

Next, in the electrode body fabrication step (step S1-2), the positive electrode 22 and the negative electrode 24 fabricated in the way above are placed to face each other via the separator 26 to thereby fabricate the electrode body 20. Then, in the arrangement step (step S1-3), the electrode body 20 is arranged inside the exterior body 12. For example, the electrode body 20 is housed into the exterior body 12 through the opening 12h of the exterior body 12. Then, in the welding and joining step (step S1-4), the sealing plate 14 is fitted into the opening 12h of the exterior body 12, and the sealing plate 14 is welded to the periphery of the opening 12h, thereby integrating the exterior body 12 and the sealing plate 14.

The preparation step (step S2) is a process of preparing a nonaqueous electrolyte. The nonaqueous electrolyte of the battery 100 disclosed herein contains fluoroethylene carbonate and a difluorophosphate. The nonaqueous electrolyte containing FEC and the difluorophosphate as described above suitably protects both the surface of the positive electrode active material and the surface of the negative electrode active material (especially, the Si-containing material), thereby improving the capacity retention rate of the battery 100. From the viewpoint of exhibiting a high level of the effect of the technology disclosed herein, it is preferable to prepare the nonaqueous electrolyte such that the ratio of the mass of FEC to the mass of the Si-containing material is 0.2 or more in the preparation step. In the preparation step, the nonaqueous electrolyte is prepared such that the ratio of the mass of FEC to the mass of the Si-containing material is preferably 0.2 or more and 1.6 or less, and more preferably 0.28 or more and 1.2 or less.

Although not particularly limited, in the preparation step, the nonaqueous electrolyte is preferably prepared such that the ratio of the mass of FEC to the total mass of the negative electrode active material (i.e., the total mass of graphite particles, the Si-containing material, and other negative electrode active materials) is 0.04 or less. In the preparation step, the nonaqueous electrolyte is prepared such that the ratio of the mass of FEC to the mass of the negative electrode active material is preferably 0.005 or more and 0.04 or less, and more preferably 0.01 or more and 0.04 or less, and it may be prepared such that the ratio is 0.01 or more and 0.035 or less.

Although not particularly limited, in the preparation step, the nonaqueous electrolyte is preferably prepared such that the volume percentage of FEC is 10% by volume or less, assuming that the total volume of the nonaqueous solvent is 100% by volume. Thus, the volume of gas produced during charging/discharging can be suitably suppressed while appropriately exhibiting the protective effect for the Si-containing material. The preparation step is performed such that, assuming that the total volume of the nonaqueous solvent is 100% by volume, the volume percentage of FEC is preferably 0.5% by volume or more and 10% by volume or less, more preferably 1% by volume or more and 10% by volume or less, and even more preferably 1% by volume or more and 7% by volume or less.

In one preferred embodiment, the nonaqueous electrolyte contains, in addition to FEC, carbonates other than FEC. One or two or more kinds of carbonates can be selected from the materials described above, and they can be used alone or in combination as appropriate. Among these, in the preparation step, the nonaqueous electrolyte is preferably prepared so as to contain at least one of DMC, DEC, EMC, EC, or VC.

LiPO₂F₂ can be suitably used as the difluorophosphate. Although not particularly limited, in the preparation step, the nonaqueous electrolyte is preferably prepared such that the ratio of the mass of the difluorophosphate to the mass of the positive electrode active material is 0.001 or more. In the preparation step, the nonaqueous electrolyte is prepared such that the ratio of the mass of the difluorophosphate to the mass of the positive electrode active material is preferably 0.001 or more and 0.01 or less, more preferably 0.001 or more and 0.005 or less, even more preferably 0.0015 or more and 0.0045 or less. Thus, the protective effect for the surface of the positive electrode and the Si-containing material is exhibited more appropriately, thereby suitably improving capacity retention rate after cycling.

Although not particularly limited, in the preparation step, the nonaqueous electrolyte is prepared such that the proportion of the difluorophosphate in the total nonaqueous electrolyte is preferably 0.1% by mass or more and 2% by mass or less, and more preferably 0.2% by mass or more and 1.2% by mass or less.

Preferably, the nonaqueous electrolyte contains a supporting salt (lithium salt in the case of lithium ion secondary batteries), in addition to FEC and the difluorophosphate. As the supporting salt, one or two or more kinds of materials can be selected from the materials described above, and they can be used alone or in combination as appropriate. Among these, LiPF₆ can be suitably used.

In the pouring step (step S3), the prepared nonaqueous electrolyte is poured into the battery case 10 through the pouring hole 15 of the sealing plate 14. The pouring may be performed at atmospheric pressure, or may be performed in a state where the inside of the battery case 10 may be depressurized, for example, for the purpose of improving impregnation of the electrode body 20 with the nonaqueous electrolyte. The electrode body 20 is impregnated with the nonaqueous electrolyte poured through the pouring hole 15. In other words, the nonaqueous electrolyte is fully spread over the electrode body 20.

Although not particularly limited, the assembly may be left (held) for a predetermined time after the pouring step. This allows the nonaqueous electrolyte to spread in the long side direction Y in a well-balanced manner, firmly impregnating the electrode body 20 with the nonaqueous electrolyte, even if the length of the assembly in the long side direction Y is relatively long, for example. The leaving temperature may be room temperature (e.g., about 25°C ± 10°C, about 25°C ± 5°C), or a high temperature environment of about 35 to 45°C, for example, for the purpose of improving the impregnation of the electrode body 20 with the nonaqueous electrolyte. The leaving time is not particularly limited because it depends on, for example, the size of the electrode body 20 (especially, its length in the long side direction Y), the viscosity of the first nonaqueous electrolyte, the presence or absence of depressurization, the leaving temperature, and the like. However, the leaving time is preferably 5 minutes or more, more preferably 10 minutes or more, and particularly preferably 1 hour or more. From the viewpoint of manufacturing efficiency and the like, it is preferably 240 hours (10 days) or less, more preferably 48 hours (2 days) or less, and particularly preferably 24 hours (1 day) or less.

In addition, the manufacturing method disclosed herein may further include a charging step. The charging step is a step in which an assembly poured with the nonaqueous electrolyte is charged at least once. Charging of the assembly can be performed in the same manner as in the prior art. Typically, an external power source is connected between the positive and negative electrode terminals of the assembly, and the assembly is charged until it reaches a predetermined voltage. Although not particularly limited, it is preferable to perform charging until the voltage reaches generally 4 V or higher, preferably 4.1 V or higher, or 4.2 V or higher, for example, 4.2 V When a lithium-rich transition metal composite oxide is used as the positive electrode active material, the charging is performed until the voltage reaches generally 4.6 V or higher, preferably 4.7 V or higher, for example, 4.7 V, from the viewpoint of exerting higher capacity as an electrochemically active state. The charge/discharge rate can be, for example, 0.1 to 2C. Charging may be performed once, or it can be repeated two or more times, for example, with discharging in between. Alternatively, discharging may be performed after charging. The charging step may be performed in a room temperature environment (e.g., about 25°C ± 10°C, or about 25°C ± 5°C) or in a high temperature environment of about 35 to 45°C. In the above manner, the battery 100 can be suitably manufactured.

### <Applications of Battery 100>

The battery 100 is usable for various applications. It can be suitably used as, for example, a power source (drive power source) for motors installed in vehicles such as passenger cars and trucks because it is excellent in cycle characteristics (e.g., capacity retention rate after cycling). The vehicle is not limited to a particular type, and may be, for example, a plug-in hybrid electric vehicle (PHEV), a hybrid electric vehicle (HEV), or a battery electric vehicle (BEV).

While some examples related to the present disclosure will be described below, the present disclosure is not intended to be limited to the examples.

### <<First Test>>

### <Fabrication of Secondary Battery for Evaluation>

### (Example 1)

First, a positive electrode and a negative electrodes were fabricated. Specifically, the positive electrode was fabricated as follows. Li_{1.14}Ni_{0.29}Mn_{0.57}O₂ as a positive electrode active material, acetylene black (AB) as a conductive material, and polyvinylidene fluoride (PVdF) as a binder were prepared. These materials were mixed at a mass ratio of the positive electrode active material: AB : PVdF = 100 : 1 : 1, and the fluidity of the mixture was adjusted with N-methylpyrrolidone (NMP) as a dispersing solvent to prepare a positive electrode material slurry. Then, the prepared positive electrode material slurry was applied on a piece of Al foil as a positive electrode current collector, dried, and pressed to a predetermined thickness. Subsequently, the pressed material was cut into a predetermined size, thereby fabricating the positive electrode.

The negative electrode was fabricated as follows. First, graphite and SiO (Si-containing material) were prepared as a negative electrode active material. These materials were mixed at a mass ratio of graphite : SiO = 95 : 5 to produce a mixture. Then, to the resulting mixture (100 parts by mass), each of SBR as a binder and CMC as a dispersant was added at a ratio of 1 part by mass (negative electrode active material: SBR : CMC = 100 : 1 : 1), and the fluidity of the mixture was adjusted with a dispersing solvent (water) to prepare a negative electrode material slurry. Then, the prepared negative electrode material slurry was applied onto a piece of Cu foil as a negative electrode current collector, dried, and pressed to a predetermined thickness. Subsequently, the pressed material was cut into a predetermined size, thereby fabricating the negative electrode.

Next, the nonaqueous electrolyte was prepared as follows. Fluoroethylene carbonate (FEC), ethylene carbonate (EC), and ethyl methyl carbonate (EMC) were prepared as solvents. These were mixed at a volume ratio of FEC : EC : EMC = 0.08 : 0.92 : 3 to prepare a nonaqueous solvent. LiPF₆ was dissolved in the prepared nonaqueous solvent at a concentration of 1 mol/L. LiPO₂F₂ was also dissolved at 0.7% by mass. In this way, the nonaqueous electrolyte was prepared.

A porous sheet consisting of three layers of PP/PE/PP was prepared as a separator. The positive electrode and the negative electrode that had been fabricated were arranged to face each other with the separator interposed between them, thereby fabricating an electrode body. Next, a positive electrode terminal and a negative electrode terminal were attached to the prepared electrode body. This assembly was then housed and sealed in a bag-shaped battery case made of an aluminum laminate film, along with the nonaqueous electrolyte. The above prepared secondary battery was charged at a constant current to 4.2 V at a charge rate of 0.1 C, followed by an activation process in which the battery was discharged at a constant current to 3.0 V at a discharge rate of 0.1 C. In this way, the secondary battery for evaluation of Example 1 was fabricated.

### (Example 2)

A nonaqueous electrolyte that contained neither FEC nor LiPO₂F₂ was prepared. Specifically, EC and EMC were mixed at a volume ratio of EC : EMC = 1 : 3 to prepare a nonacqueous solvent. LiPF₆ was dissolved in the prepared nonaqueous solvent at a concentration of 1 mol/L. In this way, the nonaqueous electrolyte of Example 2 was prepared. Except for this, the secondary battery for evaluation of Example 2 was prepared in the same manner as in Example 1.

### (Example 3)

A nonaqueous electrolyte that did not contain LiPO₂F₂ was prepared. Specifically, FEC, EC and EMC were mixed at a volume ratio of FEC : EC : EMC = 0.08 : 0.92 : 3 to prepare a nonacqueous solvent. LiPF₆ was dissolved in the prepared nonaqueous solvent at a concentration of 1 mol/L. In this way, the nonaqueous electrolyte of Example 3 was prepared. Except for this, the secondary battery for evaluation of Example 3 was prepared in the same manner as in Example 1.

### (Example 4)

A nonaqueous electrolyte that did not contain FEC was prepared. Specifically, EC and EMC were mixed at a volume ratio of EC : EMC = 1 : 3 to prepare a nonacqueous solvent. LiPF₆ was dissolved in the prepared nonaqueous solvent at a concentration of 1 mol/L. LiPO₂F₂ was also dissolved at 0.7% by mass. In this way, the nonaqueous electrolyte of Example 4 was prepared. Except for this, the secondary battery for evaluation of Example 4 was prepared in the same manner as in Example 1.

### (Examples 5 to 8)

A nonaqueous electrolyte in which the concentration (% by mass) of LiPO₂F₂ in the nonaqueous electrolyte of Example 1 was changed as shown in Table 1 was prepared. Except for this, the secondary batteries for evaluation of Examples 5 to 8 were prepared in the same manner as in Example 1.

### (Examples 9 to 11)

A nonaqueous electrolyte in which the concentration concentration (% by volume) of FEC in the nonaqueous electrolyte of Example 1 was changed as shown in Table 1 was prepared. Except for this, the secondary batteries for evaluation of Examples 9 to 11 were prepared in the same manner as in Example 1.

### (Examples 12 to 15)

As the negative electrode active material, graphite and SiO were mixed at a mass ratio of graphite : SiO = 97 : 3 to prepare a mixture. A nonaqueous electrolyte in which the concentration (% by volume) of FEC in the nonaqueous electrolyte of Example 1 was changed as shown in Table 1 was prepared. Except for these, the secondary batteries for evaluation of Examples 12 to 15 were prepared in the same manner as in Example 1.

### (Examples 16 to 19)

As the negative electrode active material, graphite and SiO were mixed at a mass ratio of graphite : SiO = 90:10 to prepare a mixture. A nonaqueous electrolyte in which the concentration (% by volume) of FEC in the nonaqueous electrolyte of Example 1 was changed as shown in Table 1 was prepared. Except for these, the secondary batteries for evaluation of Examples 16 to 19 were prepared in the same manner as in Example 1.

### <Evaluation of Capacity Retention Rate>

The secondary battery was repeatedly charged and discharged 300 cycles, each cycle involving charging at a constant current to 4.2 V at a charge rate of 0.5 C and discharging at a constant current to 3.0 V at a discharge rate of 0.5 C, under an environment of 25°C. The discharge capacity in the first cycle was defined as "initial capacity". Next, the secondary battery for evaluation after 300 cycles was charged at a constant current to 4.2 V at a charge rate of 0.1 C and discharging at a constant current to 3.0 V at a discharge rate of 0.1 C, under an environment of 25°C. The discharged capacity at this time was defined as a "post-cycle capacity". The capacity retention rate (%) was calculated using the following formula: capacity retention rate = (post-cycle capacity/initial capacity) × 100. The results are shown in Table 1.

### <Evaluation of Volume of Gas Produced>

The volume of gas produced was calculated by measuring the volume of the secondary battery for evaluation of each example before and after cycling, using the Archimedes method with fluorinert as the solvent. Specifically, the volume inside the case of the secondary battery for evaluation of each example after the activation process was first calculated based on the relationship between its weight in air and its weight in water by using the Archimedes method. This volume was defined as an "initial volume. Next, the secondary battery was repeatedly charged and discharged 300 cycles, each cycle involving charging at a constant current to 4.2 V at a charge rate of 0.5 C and discharging at a constant current to 3.0 V at a discharge rate of 0.5 C, under an environment of 25°C. Further, the volume inside the case of the secondary battery for evaluation after 300 cycles was calculated by using the Archimedes method in the same way as described above. This volume was defined as a "post-cycle volume". A difference (mL) between the post-cycle volume and the initial volume was determined, and this was set as the volume of gas produced. Furthermore, the volume of gas produced per battery capacity (ml/Ah) was calculated by dividing the volume of gas produced (mL) by the rated capacity (Ah) of each secondary battery for evaluation. The results are shown in Table 1.

### [Table 1]

**Table 1**

| | Positive electrode active material | | Negative electrode | Nonaqueous electrolyte | | LiPO₂F₂/Positive electrode active material (mass ratio) | FEC/Negative electrode active material (mass ratio) | FEC/Si content (mass sratio) | Capacity retention rate (%) | Voume of gas produced (mL/Ah) |
|---|---|---|---|---|---|---|---|---|---|---|
| | Composition | Li/Me | Si content (% by mass) | LiPO₂F_{2 (% by} mass) | FEC (% by volume) | | | | | |
| Example 1 | Li_{1.14}Ni_{0.29}Mn_{0.57}O₂ | 1.3 | 5 | 0.7 | 2 | 0.0026 | 0.014 | 0.28 | 96.5 | 0.29 |
| Example 2 | Li_{1.14}Ni_{0.29}Mn_{0.57}O₂ | 1.3 | 5 | 0 | 0 | 0 | 0 | 0 | 86 | 0 |
| Example 3 | Li_{1.14}Ni_{0.29}Mn_{0.57}O₂ | 1.3 | 5 | 0 | 2 | 0 | 0.014 | 0.28 | 92.4 | 0.24 |
| Example 4 | Li_{1.14}Ni_{0.29}Mn_{0.57}O₂ | 1.3 | 5 | 0.7 | 0 | 0.0026 | 0 | 0 | 86.6 | 0 |
| Example 5 | Li_{1.14}Ni_{0.29}Mn_{0.57}O₂ | 1.3 | 5 | 0.2 | 2 | 0.0008 | 0.014 | 0.28 | 93.4 | 0.29 |
| Example 5 | Li_{1.14}Ni_{0.29}Mn_{0.57}O₂ | 1.3 | 5 | 0.4 | 2 | 0.0015 | 0.014 | 0.28 | 96.4 | 0.30 |
| Example 7 | Li_{1.14}Ni_{0/29}Mn_{0.57}O₂ | 1.3 | 5 | 1 | 2 | 0.0038 | 0.014 | 0.28 | 96.6 | 0.30 |
| Example 3 | Li_{1.14}Ni_{0.29}Mn_{0.57}O₂ | 1.3 | 5 | 1.2 | 2 | 0.0045 | 0.014 | 0.28 | 96.7 | 0.31 |
| Example 9 | Li_{1.14}Ni₀^{.}₂₉Mn_{0.57}O₂ | 1.3 | 5 | 0.7 | 1 | 0.0026 | 0.007 | 0.14 | 90.2 | 0.22 |
| Example 10 | Li_{1.14}Ni_{0.29}Mn_{0.57}O₂ | 1.3 | 5 | 0.7 | 5 | 0.0026 | 0.035 | 0.69 | 96.5 | 0.41 |
| Example 11 | Li_{1.14}Ni_{0.29}Mn_{0.57}O₂ | 1.3 | 5 | 0.7 | 7 | 0.0026 | 0.048 | 0.96 | 96.3 | 0.70 |
| Example 12 | Li_{1.14}Ni_{0.29}Mn_{0.57}O₂ | 1.3 | 3 | 0.7 | 1 | 0.0026 | 0.007 | 0.23 | 96.5 | 0.20 |
| Example 13 | Li_{1.14}Ni_{0.29}Mn_{0.57}O₂ | 1.3 | 3 | 0.7 | 2 | 0.0026 | 0.014 | 0.46 | 96.9 | 0.28 |
| Example 14 | Li_{1.14} Ni_{0.29}Mn_{0.57}O₂ | 1.3 | 3 | 0.7 | 5 | 0.0026 | 0.035 | 1.15 | 96.8 | 0.37 |
| Example 15 | Li_{1.14}Ni_{0.29}Mn_{0.57}O₂ | 1.3 | 3 | 0.7 | 7 | 0.0026 | 0.048 | 1.61 | 96.9 | 0.68 |
| Example 16 | Li_{1.14}Ni_{0.29}Mn_{0.57}O₂ | 1.3 | 10 | 0.7 | 1 | 0.0026 | 0.007 | 0.07 | 87.5 | 0.24 |
| Example 17 | Li_{1.14}Ni_{0.29}Mn_{0.57}O₂ | 1.3 | 10 | 0.7 | 2 | 0.0026 | 0.014 | 0.14 | 89.2 | 0.29 |
| Example 18 | Li_{1.14}Ni_{0.29}Mn_{0.57}O₂ | 1.3 | 10 | 0.7 | 5 | 0.0026 | 0.035 | 0.35 | 95.8 | 0.4 |
| Example 19 | Li_{1.14}Ni_{0.29}Mn_{0.57}O₂ | 1.3 | 10 | 0.7 | 7 | 0.0026 | 0.048 | 0.48 | 95.9 | 0.73 |

As shown in Table 1, it is found that a capacity retention rate was 93% or more in Example 1, 5 to 8, 10 to 15, 18, and 19 where the negative electrode active material contained a Si-containing material, the nonaqueous electrolyte contained LiPO₂F₂ and FEC, and the ratio of the mass of FEC to the mass of the Si-containing material was 0.2 or more. That is, it can be said that a nonaqueous electrolyte secondary battery with excellent capacity retention rate after cycling is achieved by inclusion of a lithium transition metal composite oxide containing at least one of lithium and manganese as the positive electrode active material, inclusion of graphite particles and a Si-containing material as the negative electrode active material, and inclusion of FEC and a difluorophosphate in the nonaqueous electrolyte, and by setting the ratio of the mass of FEC to the mass of the Si-containing material to 0.2 or more.

On the other hand, in Examples 2 and 4 where no FEC was added, the capacity retention rate was found to be low. Also in Examples 9, 16, and 17 where the ratio of the mass of the FEC to the mass of the Si-containing material is less than 0.2, the capacity retention rate was found to be low. This is presumed to be because FEC could not sufficiently exhibit its protective effect for the negative electrode (especially, the Si-containing material contained in the negative electrode). Furthermore, also in Example 3 that did not contain LiPO₂F₂, the capacity retention rate was found to be low. This is presumed to be because the absence of LiPO₂F₂ causes FEC to adhere onto the surface of the positive electrode as well, reducing the protective effect of FEC for the surface of the negative electrode.

As shown in Table 1, when comparing Example 1 and Example 5, the capacity retention rate was found to be slightly low in Example 5 where the ratio of the mass of LiPO₂F₂ to the mass of the positive electrode active material is less than 0.001. This is presumed to be because the small amount of LiPO₂F₂ with respect to that of the positive electrode active material leads to an increase in the amount of FEC adsorbed onto the surface of the positive electrode, thus making the protective effect of FEC for the surface of the negative electrode slightly smaller.

As shown in Table 1, the volume of gas produced was found to be relatively large in Examples 11, 15 and 19 where the ratio of the mass of FEC to the mass of the negative electrode active material exceeds 0.04. This is presumed to be because the volume of gas produced when FEC is decomposed increased as the mass of FEC increased with respect to the mass of the negative electrode active material.

### <<Second Test>>

### <Fabrication of Secondary Battery for Evaluation>

### (Examples 20 to 24)

In a second test, a second battery for evaluation of each example was fabricated by changing the kind of the positive electrode active material, and its capacity retention rate and volume of gas produced were evaluated. Specifically, the secondary battery for evaluation of each example was fabricated using the positive electrode active material shown in Table 2. Except for this, the secondary batteries for evaluation of Examples 20 to 24 were prepared in the same manner as in Example 1.

### <Evaluation of Capacity Retention Rate and Volume of Gas Produced>

The capacity retention rate and volume of gas produced of the secondary battery for evaluation of each example were evaluated in the same manner as the evaluation methods described above. The results are shown in Table 2. Note that Table 2 also shows the results of Examples 1 and 2 for comparison.

### [Table 2]

**Table 2**

| | Positive electrode active material | | Negative electrode | Nonaqueous electrolyte | | LiPO₂F₂/Positive electrode active material (mass ratio) | FEC/Negative electrode active material (mass ratio) | FEC/Si content (mass ratio) | Capacity retention rate (%) | Volume of gas produced (mL/Ah) |
|---|---|---|---|---|---|---|---|---|---|---|
| | Composition | Li/Me | Si content (% by mass) | LiPO₂F₂ (% by mass) | FEC (% by volume) | | | | | |
| Example 2 | Li_{1.14}Ni_{0.29}Mn_{0.57}O₂ | 1.3 | 5 | 0 | 0 | 0 | 0 | 0 | 86 | 0 |
| Example 20 | LiNi_{0.8}Co_{0.2}Mn_{0.1}O₂ | 1.1 | 5 | 0.7 | 2 | 0.0026 | 0.014 | 0.28 | 93.5 | 0.27 |
| Example 21 | Li_{1.1}Ni_{0.35}Mn_{0.55}O₂ | 1.2 | 5 | 0.7 | 2 | 0.0026 | 0.014 | 0.28 | 93.2 | 0.29 |
| Example 1 | Li_{1.14}Ni_{0.29}Mn_{0.57}O₂ | 1.3 | 5 | 0.7 | 2 | 0.0026 | 0.014 | 0.28 | 96.5 | 0.29 |
| Example 22 | Li_{1.1}Ni_{0.25}Mn_{0.58}O₂ | 1.4 | 5 | 0.7 | 2 | 0.0026 | 0.014 | 0.28 | 95.7 | 0.28 |
| Example 23 | Li_{1.2}Ni_{0.2}Mn_{0.6}O₂ | 1.5 | 5 | 0.7 | 2 | 0.0026 | 0.014 | 0.28 | 95.5 | 0.28 |
| Example 24 | Li_{1.33}Mn_{0.67}O₂ | 2 | 5 | 0.7 | 2 | 0.0026 | 0.014 | 0.28 | 95.1 | 0.30 |

As shown in Table 2, it is found that the similar effects can be obtained even when using different kinds of positive electrode active materials. In Examples 1 and 22 to 24, where the ratio (Li/Me) of the amount of Li to the amount of the metal element other than Li exceeded 1.2, particularly the capacity retention rate was found to be favorable as shown in Table 2.

While specific examples of the present disclosure have been described above in detail, these are illustrative only, and do not limit the scope of the claims. The art recited in the claims include various modifications and alternations of the specific examples exemplified above.

As described above, the specific aspects of the art disclosed herein include those described in the following respective items.
Item 1: A nonaqueous electrolyte secondary battery, comprising: an electrode body including a positive electrode and a negative electrode; a nonaqueous electrolyte; and a battery case, the positive electrode including, as a positive electrode active material, a lithium transition metal complex oxide containing at least lithium and manganese, the negative electrode including graphite particles and a Si-containing material as a negative electrode active material, and the nonaqueous electrolyte including fluoroethylene carbonate and a difluorophosphate, wherein a ratio of a mass of the fluoroethylene carbonate to a mass of the Si-containing material is 0.2 or more.
Item 2: The nonaqueous electrolyte secondary battery according to Item 1, wherein a ratio of a mass of the fluoroethylene carbonate to a mass of the negative electrode active material is 0.04 or less.
Item 3: The nonaqueous electrolyte secondary battery according to Item 1 or 2, wherein assuming that a total content of the graphite particles and the Si-containing material is 100% by mass, a content of the Si-containing material is 1% by mass or more and 15% by mass or less.
Item 4: The nonaqueous electrolyte secondary battery according to any one of Items 1 to 3, wherein a ratio of a mass of the difluorophosphate to a mass of the positive electrode active material is 0.001 or more.
Item 5: The nonaqueous electrolyte secondary battery according to any one of Items 1 to 4, wherein the positive electrode active material is a lithium transition metal complex oxide represented by the following formula:

   Li₁₊ₐNiₓMn_{y}M_{Z}O₂ (I)

   wherein 0.1 ≤ a ≤ 0.33, 0 ≤ x ≤ 0.5, 0.5 ≤ y ≤ 0.7, 0 ≤ z ≤ 0.2, a + x + y + z = 1, and M is at least one element selected from the group consisting of Co, Al, Mg, Ca, Ti, V, Cr, Zr, Nb, Mo, Hf, Ta, and W.
Item 6: The nonaqueous electrolyte secondary battery according to any one of Items 1 to 5, wherein, when a metal element, other than Li, included in the positive electrode active material is denoted by Me, a ratio (Li/Me) of an amount of Li to an amount of the Me is 1.2 or more and 2 or less.
Item 7: The nonaqueous electrolyte secondary battery according to any one of Items 1 to 6, wherein the Si-containing material is at least one selected from the group consisting of silicon, silicon oxide, and composites of silicon and carbon.
Item 8: The nonaqueous electrolyte secondary battery according to any one of Items 1 to 7, wherein the difluorophosphate includes lithium difluorophosphate.
Item 9: A method for manufacturing a nonaqueous electrolyte secondary battery, the secondary battery including an electrode body including a positive electrode and a negative electrode, a nonaqueous electrolyte, and a battery case, the method comprising: a construction step of constructing an assembly by housing the electrode body in the battery case; a preparation step of preparing a nonaqueous electrolyte containing fluoroethylene carbonate and a difluorophosphate; and a pouring step of pouring the nonaqueous electrolyte into the battery case, wherein the positive electrode includes a positive electrode active material, the negative electrode includes graphite particles and a Si-containing material as a negative electrode active material, and in the preparation step, the nonaqueous electrolyte is prepared such that a ratio of a mass of the fluoroethylene carbonate to a mass of the Si-containing material is 0.2 or more.
Item 10: The method according to Item 9, wherein in the preparation step, the nonaqueous electrolyte is prepared such that a ratio of a mass of the fluoroethylene carbonate to a mass of the negative electrode active material is 0.04 or less.
Item 11: The method according to Item 9 or 10, wherein in the preparation step, the nonaqueous electrolyte is prepared such that a ratio of a mass of the difluorophosphate to a mass of the positive electrode active material is 0.001 or more.
Item 12: The method according to any one of Items 9 to 11, wherein the positive electrode active material is a lithium transition metal complex oxide represented by the following formula:

   Li₁₊ₐNiₓMn_{y}M_{Z}O₂ (I)

   wherein 0.1 ≤ a ≤ 0.33, 0 ≤ x ≤ 0.5, 0.5 ≤ y ≤ 0.7, 0 ≤ z ≤ 0.2, a + x + y + z = 1, and M is at least one element selected from the group consisting of Co, Al, Mg, Ca, Ti, V, Cr, Zr, Nb, Mo, Hf, Ta, and W.
Item 13: The method according to any one of Items 9 to 12, wherein, when a metal element, other than Li, included in the positive electrode active material is denoted by Me, a ratio (Li/Me) of an amount of Li to an amount of the Me is 1.2 or more and 2 or less.

### DESCRIPTION OF REFERENCE CHARACTERS

10 Battery case
20 Electrode body
22 Positive electrode
22a Positive electrode active material layer
24 Negative electrode
24a Negative electrode active material layer
100 Battery (nonaqueous electrolyte secondary battery)
S1 Construction step
S2 Preparation step
S3 Pouring step

## Claims

1. A nonaqueous electrolyte secondary battery (100) comprising: an electrode body (20) including a positive electrode (22) and a negative electrode (24); a nonaqueous electrolyte; and a battery case (10),
the positive electrode (22) including, as a positive electrode active material, a lithium transition metal complex oxide containing at least lithium and manganese,
the negative electrode (24) including graphite particles and a Si-containing material as a negative electrode active material, and
the nonaqueous electrolyte including fluoroethylene carbonate and a difluorophosphate,
wherein a ratio of a mass of the fluoroethylene carbonate to a mass of the Si-containing material is 0.2 or more.

2. The nonaqueous electrolyte secondary battery (100) according to claim 1, wherein a ratio of a mass of the fluoroethylene carbonate to a mass of the negative electrode active material is 0.04 or less.

3. The nonaqueous electrolyte secondary battery (100) according to claim 1 or 2, wherein assuming that a total content of the graphite particles and the Si-containing material is 100% by mass, a content of Si-containing material is 1% by mass or more and 15% by mass or less.

4. The nonaqueous electrolyte secondary battery (100) according to any one of claims 1 to 3, wherein a ratio of a mass of the difluorophosphate to a mass of the positive electrode active material is 0.001 or more.

5. The nonaqueous electrolyte secondary battery (100) according to any one of claims 1 to 4, wherein the positive electrode active material is a lithium transition metal complex oxide represented by the following formula:
Li₁₊ₐNiₓMn_{y}M_{z}O₂ (I)
wherein 0.1 ≤ a ≤ 0.33, 0 ≤ x ≤ 0.5, 0.5 ≤ y ≤ 0.7, 0 ≤ z ≤ 0.2, a + x + y + z = 1, and M is at least one element selected from the group consisting of Co, Al, Mg, Ca, Ti, V, Cr, Zr, Nb, Mo, Hf, Ta, and W.

6. The nonaqueous electrolyte secondary battery (100) according to any one of claims 1 to 5, wherein, when a metal element, other than Li, included in the positive electrode active material is denoted by Me, a ratio (Li/Me) of an amount of Li to an amount of the Me is 1.2 or more and 2 or less.

7. The nonaqueous electrolyte secondary battery (100) according to any one of claims 1 to 6, wherein the Si-containing material is at least one selected from the group consisting of silicon, silicon oxide, and composites of silicon and carbon.

8. The nonaqueous electrolyte secondary battery (100) according to any one of claims 1 to 7, wherein the difluorophosphate includes lithium difluorophosphate.

9. A method for manufacturing a nonaqueous electrolyte secondary battery (100), the secondary battery including an electrode body (20) including a positive electrode (22) and a negative electrode (24), a nonaqueous electrolyte, and a battery case (10), the method comprising:
a construction step (S1) of constructing an assembly by housing the electrode body (20) in the battery case (10);
a preparation step (S2) of preparing a nonaqueous electrolyte containing fluoroethylene carbonate and a difluorophosphate; and
a pouring step of pouring the nonaqueous electrolyte into the battery case (10), wherein the positive electrode (22) includes a positive electrode active material, and the negative electrode (24) includes graphite particles and a Si-containing material as a negative electrode active material, and
in the preparation step (S2), the nonaqueous electrolyte is prepared such that a ratio of a mass of the fluoroethylene carbonate to a mass of the Si-containing material is 0.2 or more.

10. The method according to claim 9, wherein in the preparation step (S2), the nonaqueous electrolyte is prepared such that a ratio of a mass of the fluoroethylene carbonate to a mass of the negative electrode active material is 0.04 or less.

11. The method according to claim 9 or 10, wherein in the preparation step (S2), the nonaqueous electrolyte is prepared such that a ratio of a mass of the difluorophosphate to a mass of the positive electrode active material is 0.001 or more.

12. The method according to any one of claims 9 to 11, wherein the positive electrode active material is a lithium transition metal complex oxide represented by the following formula:
Li₁₊ₐNiₓMn_{y}M_{z}O₂ (I)
wherein 0.1 ≤ a ≤ 0.33, 0 ≤ x ≤ 0.5, 0.5 ≤ y ≤ 0.7, 0 ≤ z ≤ 0.2, a + x + y + z = 1, and M is at least one element selected from the group consisting of Co, Al, Mg, Ca, Ti, V, Cr, Zr, Nb, Mo, Hf, Ta, and W.

13. The method according to any one of claims 9 to 12, wherein when a metal element, other than Li, included in the positive electrode active material is denoted by Me, a ratio (Li/Me) of an amount of Li to an amount of the Me is 1.2 or more and 2 or less.
